# EUROPÄISCHE PATENTSCHRIFT

(11) **EP 2 035 658 B1**
(45) Veröffentlichungstag und Bekanntmachung des Hinweises auf die Patenterteilung: **28.07.2010**
(21) Anmeldenummer: 07763725.4
(22) Anmeldetag: 29.06.2007
(51) Int. Cl.: F01D 9/04, F01D 25/24, F04D 29/54, F01D 5/28

(54) **LEITSCHAUFELANORDNUNG FÜR EIN TRIEBWERK**
GUIDE VANE ARRANGEMENT FOR A DRIVING MECHANISM
DISPOSITIF D'AUBES DIRECTRICES POUR UN GROUPE PROPULSEUR

(30) Priorität: 30.06.2006 AT 11052006
(43) Veröffentlichungstag der Anmeldung: 18.03.2009
(73) Patentinhaber: FACC AG, 4910 Ried im Innkreis (AT)
(72) Erfinder: LUTZ, Andreas, 8042 Graz (AT); WETTEMANN, Thomas, 88364 Wolfegg (DE)
(74) Vertreter: Sonn & Partner Patentanwälte
(86) Internationale Anmeldenummer: PCT/AT2007/000325
(87) Internationale Veröffentlichungsnummer: WO 2008/000014

(56) Entgegenhaltungen:
- EP-A- 0 513 958
- DE-A1- 10 323 132
- GB-A- 2 418 460
- US-A- 5 083 900
- US-A- 5 624 618

## Beschreibung

Die Erfindung betrifft eine Leitschaufelanordnung zur Umlenkung der Strömung im Nebenstromkanal eines Triebwerks, mit einem äußeren Ring und einem inneren Ring und dazwischen im Wesentlichen radial angeordneten Leitschaufeln, wobei der äußere Ring Elemente zur Verbindung mit einer äußeren Triebwerksstruktur und der innere Ring Elemente zur Verbindung mit einer inneren Triebwerksstruktur aufweist, wobei mehrere Segmente vorgesehen sind.

Die Erfindung ist insbesondere auf Strahltriebwerke wie sie bei Flugzeugen, insbesondere großen Passagier- oder Frachtflugzeugen, verwendet werden, gerichtet. Das Strahltriebwerk arbeitet nach dem Prinzip des Rückstoßantriebes, wobei die Umgebungsluft angesaugt und als Antriebsstrahl ausgestoßen wird. Um das Triebwerk ist ein so genannter ringförmiger Nebenstromkanal angeordnet, durch den ein Teil der Luft strömt. Dieser Nebenstromkanal oder Bypass wird von der inneren Triebwerksstruktur, welche das Kerntriebwerk umschließt, und die äußere Triebwerksstruktur begrenzt. Zur Umlenkung der Strömung innerhalb des Nebenstromkanals werden Leitschaufeln eingesetzt, die zwischen der inneren und äußeren Triebwerksstruktur angeordnet sind. Üblicherweise sind diese Leitschaufeln aus Metall, insbesondere Titan, gebildet und mit der inneren und äußeren Triebwerksstruktur entsprechend verbunden.

Zur Erzielung der erforderlichen Stabilität sind üblicherweise zusätzliche Elemente zwischen der inneren und äußeren Triebwerksstruktur angeordnet. Diese zusätzlichen Streben erhöhen den Herstellungsaufwand wie auch das Gewicht des gesamten Triebwerks und verschlechtern die aerodynamische Güte im Bypass.

Eines der obersten Ziele in der Luftfahrttechnik ist die Gewichtsreduktion und in der Folge die Treibstoffeinsparung. Aus diesem Grund werden zahlreiche Bestandteile eines Flugzeuges anstelle aus Metall aus Kunststoffverbundwerkstoffen hergestellt. Entwicklungstrends zielen auf den Einsatz von faserverstärkten Kunststoffverbundwerkstoffen auch im Strukturbereich ab. Auch im Bereich der Triebwerksstruktur ist man bestrebt, Bestandteile aus den leichteren faserverstärkten Kunststoffverbundwerkstoffen herzustellen und dadurch Gewicht einzusparen.

Beispielsweise zeigt die US 4,596,621 A ein Verfahren zur Herstellung einer so genannten Kaskade, wie sie beim Schubumkehrmechanismus in Triebwerken verwendet wird, aus faserverstärkten Kunststoffverbundwerkstoffen. Insbesondere bei Bauteilen komplexer Geometrie ist die nicht oder nur teilweise automatisierbare Herstellung in Kunststoffverbundwerkstoffen jedoch nicht wirtschaftlich.

Auch die US 5,624,618 A beschreibt ein Verfahren zur Bildung von Bauteilen komplexer Geometrie aus Verbundwerkstoffen, wobei auch hier die so genannten Kaskaden, über welche bei der Schubumkehr die Luft in die entgegengesetzte Richtung gelenkt wird, erwähnt werden. Im Gegensatz zur gegenständlichen Leitschaufelanordnung werden an die Kaskaden gemäß der US 5,624,618 A nicht so hohe Anforderungen hinsichtlich Stabilität gestellt.

Die DE 103 23 132 A1 beschreibt eine verstellbare Leitschaufel aus faserverstärktem Kunststoff und ein Verfahren zur Herstellung der selben.

Eine Leitschaufelanordnung der gegenständlichen Art ist beispielsweise aus der EP 1 167 693 B1 bekannt, wobei die Leitschaufeln an ihren Enden mit aerodynamischen Verkleidungen versehen sind, welche die Elemente zur Verbindung mit dem äußeren und inneren Ring der Triebwerksstruktur enthalten. Dementsprechend ist die Befestigung der Segmente relativ aufwändig und muss durch radial angebrachte Verbindungselemente vorgenommen werden.

Auch bei der Leitschaufelanordnung gemäß der US 5 584 654 A ist die Befestigung der einzelnen Segmente mit einem relativ hohen Aufwand verbunden.

Die Konstruktion gemäß der GB 2 418 460 A zeigt eine Leitschaufelanordnung, welche durch einen Aufbau mit besonders niedriger Dichte charakterisiert ist.

Die Aufgabe der vorliegenden Erfindung ist die Schaffung einer Leitschaufelanordnung der gegenständlichen Art, welche sowohl die aerodynamischen als auch die statischen Aufgaben erfüllt und möglichst niedriges Gewicht aufweist. Die Leitschaufelanordnung soll daher integral herstellbar sein und darüber hinaus rasch austauschbar sein. Nachteile bekannter Leitschaufelanordnungen sollen vermieden oder zumindest reduziert werden.

Gelöst wird die erfindungsgemäße Aufgabe dadurch, dass jedes Segment zumindest aus einer Leitschaufel mit einem Teil des äußeren Rings mit zumindest zwei Flanschen zur Befestigung mit der äußeren Triebwerksstruktur und einem Teil des inneren Rings mit zumindest zwei Flanschen zur Befestigung mit der inneren Triebwerksstruktur einstückig hergestellt ist, und dass die Segmente aus faserverstärktem Kunststoff hergestellt sind, und dass zumindest ein Großteil der Fasern jedes Segments durchgehend von den Flanschen des äußeren Ringteils über die zumindest eine Leitschaufel zu den Flanschen des inneren Ringteils durch mehrfache Umlenkung angeordnet ist. Durch die Trennung der Leitschaufelanordnung in mehrere Segmente können diese trotz der komplexen Geometrien relativ einfach und rasch hergestellt werden. Eine voll integrale Leitschaufelanordnung für ein Strahltriebwerk einer Passagiermaschine, welche Dimensionen von mehreren Metern umfasst, wäre technisch und ökonomisch derzeit nicht herstellbar. Dadurch, dass jedes Segment zumindest aus einer Leitschaufel mit einem Teil des äußeren Rings und einem Teil des inneren Rings einstückig hergestellt ist, erfüllt jedes Segment der Leitschaufelanordnung die erforderliche statische Aufgabe, weshalb keine weiteren Streben zwischen äußerer und innerer Triebwerksstruktur erforderlich sind. Dies bewirkt wiederum eine Reduktion des Gesamtgewichts des Triebwerks. Über die vorzugsweise in Umfangsrichtung des Triebwerks orientierten Flansche können die Segmente besonders einfach mit der inneren und äußeren Triebwerksstruktur verbunden und entsprechend fixiert werden. Durch die Integration der Flansche in den Segmenten werden die Befestigungselemente in der Leitschaufelanordnung integriert. Verbindungen zwischen den Komponenten der Leitschaufelanordnung entfallen grundsätzlich, können aber je nach Steifigkeitsanforderung vorgesehen bzw. notwendig sein. Durch den Einbau der Leitschaufelanordnung im Triebwerk wird die notwendige Stabilität erreicht und es können die auftretenden Triebwerkslasten an die Flugzeugzelle übertragen werden. Ein weiterer Vorteil in der Aufteilung der Leitschaufelanordnung in mehrere Segmente besteht darin, dass bei Beschädigung eines Teils der Leitschaufelanordnung nur das betroffene Segment bzw. die betroffenen Segmente ausgetauscht werden muss bzw. müssen und nicht die gesamte Leitschaufelanordnung repariert werden muss. Aufgrund der Verwendung eines faserverstärkten Kunststoffverbundwerkstoffs für die Segmente kann das Gewicht gegenüber herkömmlichen Bauweisen aus Metall deutlich reduziert werden. Moderne faserverstärkte Kunststoffverbundwerkstoffe halten auch den im Nebenstromkanal eines Triebwerks auftretenden Temperaturen von üblicherweise 100-130°C ohne weiteres Stand. Die gegenständliche Leitschaufelanordnung besteht aus reinem faserverstärkten Kunststoffverbundwerkstoff und erfüllt sowohl die statischen als auch die aerodynamischen Aufgaben. Dadurch, dass zumindest ein Großteil der Fasern jedes Segments durchgehend von den Flanschen des äußeren Ringteils über die zumindest eine Leitschaufel zu den Flanschen des inneren Ringteils durch mehrfache Umlenkung angeordnet ist, kann eine ausreichend hohe Festigkeit, insbesondere bei Leitschaufelanordnungen für besonders große Triebwerke, erzielt werden. Somit werden durchgehende Faserstränge mehrfach umgelenkt, wodurch die Kraft entlang der Faserstränge geleitet werden kann und nicht interlaminar übertragen werden muss. Dies resultiert in einer besonders hohen Festigkeit der Segmente bzw. der gesamten Leitschaufelanordnung, wodurch zusätzliche Streben zwischen der äußeren Triebwerksstruktur und der inneren Triebwerksstruktur entfallen können. Dies schlägt sich wiederum in einem niedrigeren Gesamtgewicht der Anordnung nieder.

Vorteilhafterweise sind die Segmente der Leitschaufelanordnung aus Kohlenstofffaser-verstärktem Kunststoff hergestellt. Neben dem geringen Gewicht von Kohlenstoffasern weisen diese auch einen besonders niedrigen Temperaturkoeffizienten und eine besonders hohe Gewichts-spezifische Steifigkeit und Festigkeit auf.

Gemäß einem weiteren Merkmal der Erfindung können im faserverstärkten Kunststoffverbundwerkstoff reaktive Materialien, wie beispielsweise Thermoplastfäden, eingenäht oder eingewebt werden. Dadurch können bestimmte Eigenschaften wie Festigkeit oder Schlagzähigkeit erhöht werden. Beispielsweise kann das verwendete Carbongewebe mit Thermoplastfäden verwebt werden und nach Zugabe des Harzes das Thermoplastmaterial aufgelöst werden, wodurch die Schlagzähigkeit erhöht wird.

Weiters können Vernähungen im faserverstärkten Kunststoffverbundwerkstoff im Wesentlichen quer zur Lagenrichtung vorgesehen sein, durch welche die interlaminare Kraftübertragung verbessert werden kann. Zur Vernähung eignen sich Glasfasern, Kohlefasern, Fasern aus Kevlar^{®} oder verschiedene Garne.

Die Segmente können in Harzinjektionsverfahren hergestellt werden, wobei sich insbesondere das RTM (Resin Transfer Moulding)- und das VARTM (Vakuum Assisted RTM)-Verfahren eignen. Bei derartigen Herstellungsverfahren werden die trockenen Fasern in eine geschlossene Form eingelegt, die Form evakuiert und das flüssige Harz allenfalls unter Druck injiziert. Durch Wärme wird das Harz ausgehärtet.

Um eine möglichst rasche und einfache Befestigung der Segmente der Leitschaufelanordnung an der äußeren bzw. inneren Triebwerksstruktur zu ermöglichen, sind in den Flanschen mehrere Bohrungen zur Aufnahme von Bolzen oder dgl. als Elemente zur Verbindung mit den Triebwerksstrukturen angeordnet.

Es ist nicht erforderlich, die Segmente der Leitschaufelanordnung untereinander zu verbinden. Natürlich ist es jedoch möglich, eine Verbindung zwischen den Segmenten vorzusehen. Dabei können die Segmente untereinander verklebt werden oder auch über entsprechende Verbindungselemente wie z.B. Bolzen, Schrauben oder dgl. lösbar miteinander verbunden werden.

Zur Erhöhung der Steifigkeit bei gleichzeitig möglichst niedrigem Gewicht können an den Flanschen der Segmente Versteifungselemente aus faserverstärktem Kunststoff angeordnet und mit diesen integriert sein.

Zum Schutz der Segmente der Leitschaufelanordnung können an den Segmenten Beschichtungen oder Schutzelemente angeordnet sein. Vorteilhafterweise sind diese Beschichtungen oder Schutzelemente an Kanten der zumindest einen Leitschaufel jedes Segments, insbesondere an der auf den Luftstrom bezogenen Vorderkante der Leichtschaufel, angeordnet. Diese Beschichtungen oder Schutzelemente können beispielsweise aus Metall gebildet sein. Die Schutzelemente können an die Kante, insbesondere Vorderkante der zumindest einen Leitschaufel jedes Segments aufgeklebt sein.

Die vorliegende Erfindung wird anhand der beigefügten Zeichnungen näher erläutert.

Darin zeigen
Fig. 1 eine schematische Ansicht auf ein Triebwerk in geschnittener Darstellung;
Fig. 2 die Draufsicht auf eine Leitschaufelanordnung gemäß der vorliegenden Erfindung;
Fig. 3a und 3b zwei verschiedene perspektivische Ansichten auf ein erfindungsgemäßes Segment einer Leitschaufelanordnung;
Fig. 4 eine perspektivische Ansicht auf eine Leitschaufelanordnung gemäß der vorliegenden Erfindung; und
Fig. 5 eine perspektivische Ansicht auf eine weitere Ausführungsform eines Segments einer Leitschaufelanordnung gemäß der vorliegenden Erfindung.

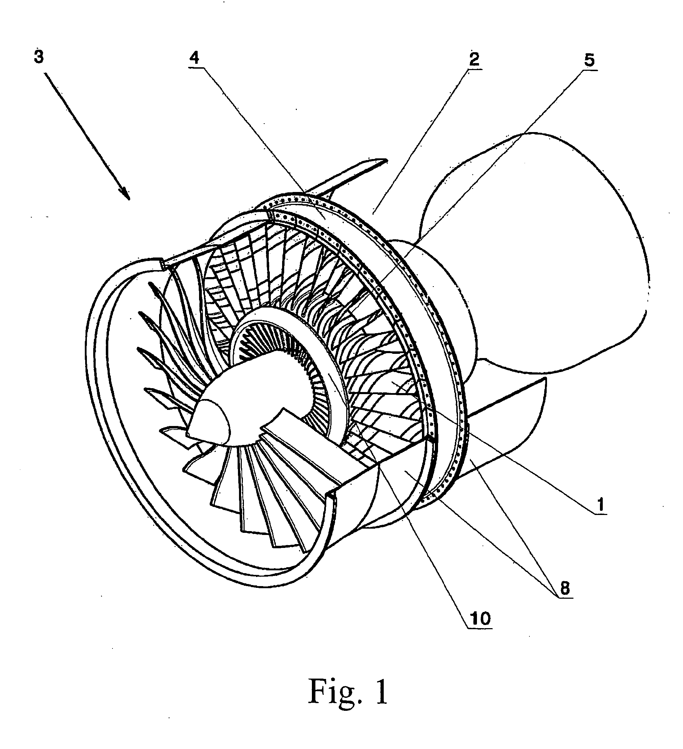

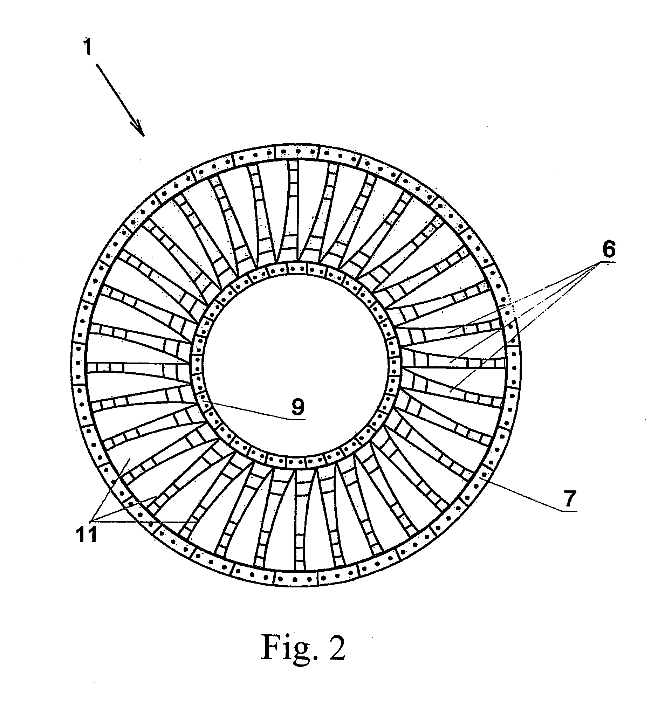

Fig. 1 zeigt schematisch ein Triebwerk 3 in teilweise geschnittener Darstellung. Zwischen einer äußeren Triebwerksstruktur 8 und einer inneren Triebwerksstruktur 10 befindet sich der so genannte Nebenstromkanal 2 bzw. Bypass, über den der kalte Teil der Luftströmung strömt. Von der inneren Triebwerksstruktur 10 ist das Kerntriebwerk selbst und der heiße Triebwerksstrom umschlossen. An der vorderen Öffnung des Triebwerks 3 befinden sich rotierende Laufschaufeln. Hinter diesem befindet sich die Leitschaufelanordnung 1, welche fix zwischen der äußeren Triebwerksstruktur 8 und der inneren Triebwerksstruktur 10 befestigt ist. Die Leitschaufeln 6 (siehe Fig. 2) der Leitschaufelanordnung 1 dienen dazu, die vom Rotor in Form einer höheren Strömungsgeschwindigkeit in Umfangsrichtung zugeführte Energie in nutzbare Arbeit (Druckerhöhung, Vortrieb) umzuformen. Die Leitschaufelanordnung 1 besteht aus einem äußeren Ring 4 und einem inneren Ring 5 und dazwischen angeordneten Leitschaufeln 6. Zur Verbindung der Leitschaufelanordnung 1 mit der äußeren Triebwerksstruktur 8 und der inneren Triebwerksstruktur 10 sind am äußeren Ring 4 der Leitschaufelanordnung 1 Verbindungselemente 7 und am inneren Ring 5 der Leitschaufelanordnung 1 Verbindungselemente 9 (siehe Fig. 2) angeordnet. Diese Verbindungselemente 7, 9 können im einfachsten Fall durch Bohrungen gebildet sein, durch die entsprechende Bolzen, Schrauben oder dgl. zur Verbindung der Leitschaufelanordnung 1 mit den Triebwerksstrukturen 8, 10 platziert werden (siehe Fig. 2).

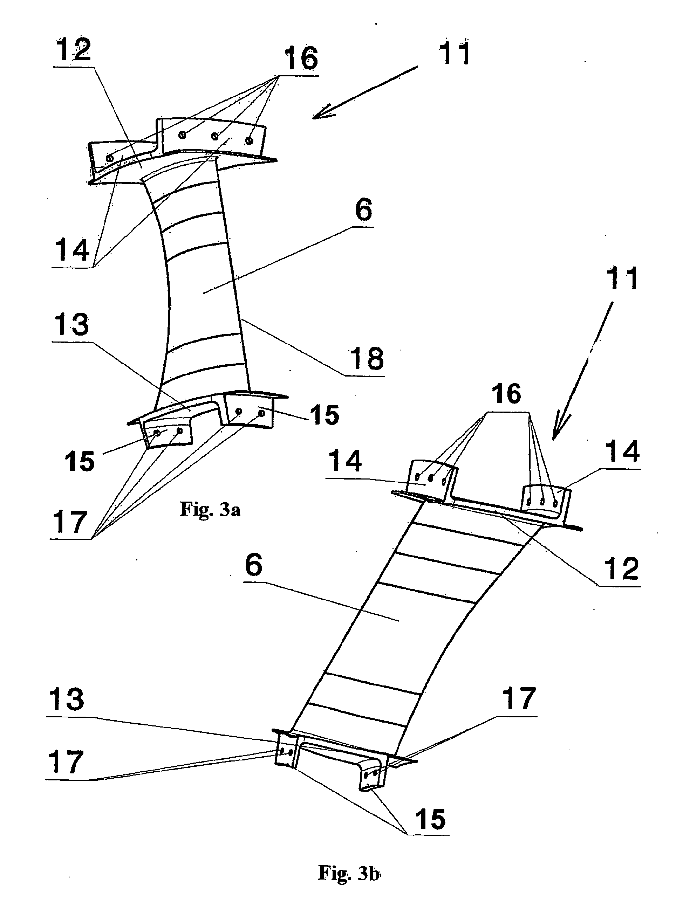

Fig. 2 zeigt die Vorderansicht auf eine Leitschaufelanordnung 1 gemäß der vorliegenden Erfindung. Dabei ist die Leitschaufelanordnung 1 in mehrere Segmente 11 unterteilt, wobei jedes Segment 11 zumindest aus einer Leitschaufel 6 mit einem Teil 12 des äußeren Rings 4 und einem Teil 13 des inneren Rings 5 einstückig vorzugsweise aus faserverstärktem Kunststoffverbundwerkstoff hergestellt ist (siehe Fig. 3a und 3b). Die dargstellte Ausführungsform der Leitschaufelanordnung 1 besteht aus 32 Segmenten mit jeweils einer Leitschaufel 6. Natürlich können auch weniger oder mehr Segmente 11 vorgesehen sein und auch pro Segment 11 mehr als eine Leitschaufel 6 angeordnet werden. Die Herstellung eines Segments 11 mit zwei oder mehr Leitschaufeln 6 ist jedoch mit höherem Aufwand verbunden.

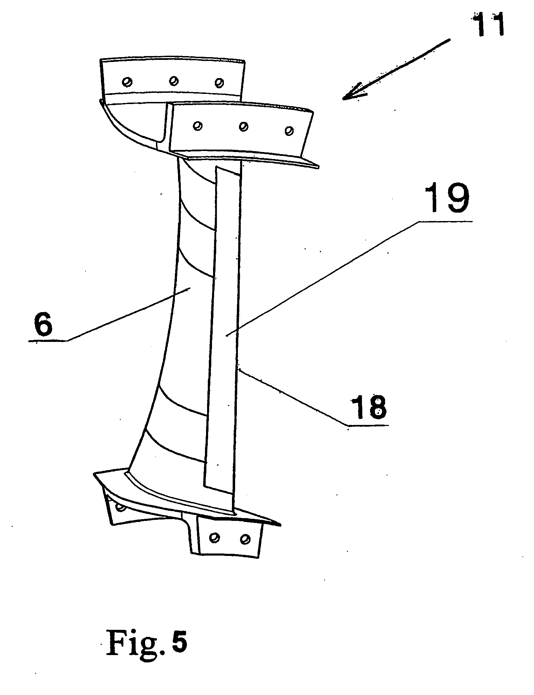

Die Fig. 3a und 3b zeigen zwei verschiedene Ansichten auf ein Segment 11 einer Leitschaufelanordnung 1. Das Segment 11 beinhaltet einen Teil 12 des äußeren Rings 4 der Leitschaufelanordnung 1 gemäß Fig. 2 einer Leitschaufel 6 und einen Teil 13 des inneren Rings 5 der Leitschaufelanordnung 1 gemäß Fig. 2. Zusätzlich sind sowohl am Ringteil 12 als auch am Ringteil 13 jeweils zwei Flansche 14, 15 angeordnet, über die das Segment 11 mit der äußeren Triebwerksstruktur 8 und der inneren Triebwerksstruktur 10 (nicht dargestellt) verbunden werden kann. Zur Verbindung des Segments 11 mit den Triebwerksstrukturen 8, 10 sind vorzugsweise Bohrungen 16, 17 an den Flanschen 14, 15 angeordnet. Durch diese Bohrungen 16, 17 können entsprechende Bolzen, Schrauben oder dgl. zur Befestigung mit der entsprechenden Struktur an der Triebwerksstruktur 8, 10 angeordnet werden. Schließlich kann an einer Kante der Leitschaufel 6, insbesondere an der auf den Luftstrom bezogenen Vorderkante 18 der Leitschaufel 6, oder flächig eine Beschichtung oder ein Schutzelement 19 (s. Fig. 5) angeordnet sein.

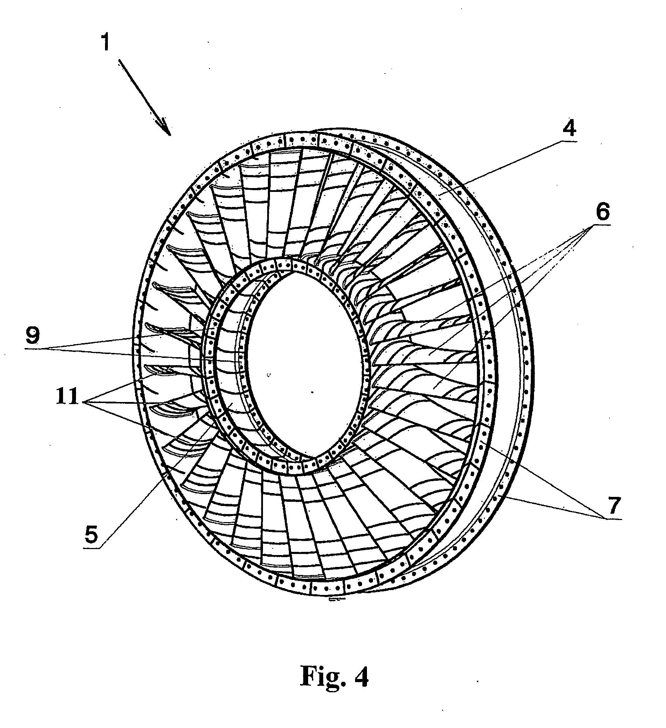

Fig. 4 zeigt eine perspektivische Ansicht auf die Leitschaufelanordnung 1 gemäß der vorliegenden Erfindung. Die Segmente 11 der Leitschaufelanordnung 1 sind untereinander nicht zwingend verbunden, können jedoch auch verklebt oder lösbar über entsprechende Verbindungselemente (nicht dargestellt) miteinander verbunden sein.

Fig. 5 zeigt eine perspektivische Ansicht auf eine weitere Ausführungsform eines Segments 11 einer Leitschaufelanordnung 1, bei der an der Vorderkante 18 der Leitschaufel 6 ein Schutzelement 19 angeordnet, beispielsweise aufgeklebt ist.

Durch die erfindungsgemäße Leitschaufelanordnung, welche aus reinem faserverstärkten Kunststoffverbundwerkstoff hergestellt ist, können Triebwerke mit niedrigerem Gewicht hergestellt werden und durch die Austauschbarkeit einzelner Segmente 11 leichter und rascher repariert werden.

## Patentansprüche

1. Leitschaufelanordnung (1) zur Umlenkung der Strömung im Nebenstromkanal (2) eines Triebwerks (3), mit einem äußeren Ring (4) und einem inneren Ring (5) und dazwischen im Wesentlichen radial angeordneten Leitschaufeln (6), wobei der äußere Ring (4) Elemente (7) zur Verbindung mit einer äußeren Triebwerksstruktur (8) und der innere Ring (5) Elemente (9) zur Verbindung mit einer inneren Triebwerksstruktur (10) aufweist, wobei mehrere Segmente (11) vorgesehen sind, wobei jedes Segment (11) zumindest aus einer Leitschaufel (6) mit einem Teil (12) des äußeren Rings (4) mit zumindest zwei Flanschen (14) zur Befestigung mit der äußeren Triebwerksstruktur (8) und einem Teil (13) des inneren Rings (5) mit zumindest zwei Flanschen (15) zur Befestigung mit der inneren Triebwerksstruktur (10) einstückig hergestellt ist, **dadurch gekennzeichnet dass** die Segmente (11) aus faserverstärktem Kunststoff hergestellt sind, und dass zumindest ein Großteil der Fasern jedes Segments (11) durchgehend von den Flanschen (14) des äußeren Ringteils (12) über die zumindest eine Leitschaufel (6) zu den Flanschen (15) des inneren Ringteils (13) durch mehrfache Umlenkung angeordnet ist.

2. Anordnung (1) nach Anspruch 1, **dadurch gekennzeichnet, dass** die Segmente (11) aus Kohlenstofffaser-verstärktem Kunststoff hergestellt sind.

3. Anordnung (1) nach Anspruch 1 oder 2, **dadurch gekennzeichnet, dass** im faserverstärkten Kunststoffverbundwerkstoff reaktive Materialien, wie beispielsweise Thermoplastfäden, eingenäht oder eingewebt sind.

4. Anordnung (1) nach einem der Ansprüche 1 bis 3, **dadurch gekennzeichnet, dass** Vernähungen im faserverstärkten Kunststoffverbundwerkstoff im Wesentlichen quer zur Lagenrichtung vorgesehen sind.

5. Anordnung (1) nach einem der Ansprüche 1 bis 4, **dadurch gekennzeichnet, dass** jedes Segment (11) in Harzinjektionsverfahren hergestellt ist.

6. Anordnung (1) nach Anspruch 5, **dadurch gekennzeichnet, dass** jedes Segment (11) im RTM (Resin Transfer Moulding)-Verfahren hergestellt ist.

7. Anordnung (1) nach Anspruch 5, **dadurch gekennzeichnet, dass** jedes Segment (11) im VARTM (Vakuum Assisted RTM)-Verfahren hergestellt ist.

8. Anordnung (1) nach einem der Ansprüche 1 bis 7, **dadurch gekennzeichnet, dass** in den Flanschen (14, 15) mehrere Bohrungen (16, 17) zur Aufnahme von Bolzen oder dgl. als Elemente (7, 9) zur Verbindung mit den Triebwerksstrukturen (8, 10) angeordnet sind.

9. Anordnung (1) nach einem der Ansprüche 1 bis 8, **dadurch gekennzeichnet, dass** die Segmente (11) miteinander verbunden sind.

10. Anordnung (1) nach Anspruch 9, **dadurch gekennzeichnet, dass** die Segmente (11) miteinander verklebt sind.

11. Anordnung (1) nach Anspruch 9, **dadurch gekennzeichnet, dass** die Segmente (11) über Verbindungselemente, wie z.B. Bolzen, Schrauben oder dgl., lösbar miteinander verbunden sind.

12. Anordnung (1) nach einem der Ansprüche 1 bis 11, **dadurch gekennzeichnet, dass** an den Flanschen (14, 15) der Segmente (11) Versteifungselemente aus faserverstärktem Kunststoff angeordnet sind.

13. Anordnung (1) nach einem der Ansprüche 1 bis 12, **dadurch gekennzeichnet, dass** an den Segementen (11) Beschichtungen oder Schutzelemente (19) angeordnet sind.

14. Anordnung (1) nach Anspruch 13, **dadurch gekennzeichnet, dass** an Kanten der zumindest einen Leitschaufel (6) jedes Segments (11), insbesondere an der auf den Luftstrom bezogenen Vorderkante (18), Beschichtungen angeordnet sind.

15. Anordnung (1) nach Anspruch 13, **dadurch gekennzeichnet, dass** an Kanten der zumindest einen Leitschaufel (6) jedes Segments (11), insbesondere an der auf den Luftstrom bezogenen Vorderkante (18), Schutzelemente (19) angeordnet sind.

## Claims

1. A guide-vane arrangement (1) for deviating the flow present in the by-pass flow channel (2) of an engine (3), said arrangement comprising an outer ring (4) and an inner ring (5) and guide vanes (6) arranged therebetween in a substantially radial manner, wherein the outer ring (4) has elements (7) for connecting to an outer engine structure (8), and the inner ring (5) has elements (9) for connecting to an inner engine structure (10), with a plurality of segments (11) being provided, and with each segment (11) being integrally produced from at least one guide vane (6) with a part (12) of the outer ring (4) having at least two flanges (14) for fixing to the outer engine structure (8), and with a part (13) of the inner ring (5) having at least two flanges (15) for fixing to the inner engine structure (10), **characterised in that** the segments (11) are made of fiber-reinforced plastic composite material, and that at least a major part of the fibers of each segment (11) is continuously arranged from the flanges (14) of the outer ring member (12) across the at least one guide vane (6) to the flanges (15) of the inner ring member (13) by several diversions.

2. The arrangement (1) according to claim 1, **characterized in that** the segments (11) are made of carbon-fiber-reinforced plastics.

3. The arrangement (1) according to claim 1 or 2, **characterized in that** reactive materials, e.g. thermoplastic filaments are sewed into, or interwoven with, the fiber-reinforced plastic composite material.

4. The arrangement (1) according to any one of claims 1 to 3, **characterized in that** these sew-ups in the fiber-reinforced plastic composite material are provided to run substantially transversely to the web direction.

5. The arrangement (1) according to any one of claims 1 to 4, **characterized in that** each segment (11) is produced by resin injection methods.

6. The arrangement (1) according to claim 5, **characterized in that** each segment (11) is produced by an RTM (resin transfer molding) method.

7. The arrangement (1) according to claim 5, **characterized in that in that** each segment (11) is produced by a VARTM (vacuum-assisted RTM) method.

8. The arrangement (1) according to any one of claims 1 to 7, **characterized in that** a plurality of bores (16, 17) is provided in the flanges (14, 15) for receiving bolts or the like serving as elements (7, 9) for connecting to the engine structures (8, 10).

9. The arrangement (1) according to any one of claims 1 to 8, **characterized in that** the segments (11) are interconnected.

10. The arrangement (1) according to claim 9, **characterized in that** the segments (11) are glued to each other.

11. The arrangement (1) according to claim 9, **characterized in that** the segments (11) are interconnected in a detachable manner via connecting elements, e.g. bolts, screws or the like.

12. The arrangement (1) according to any one of claims 1 to 11, **characterized in that** stiffening elements made of fiber-reinforced plastics are arranged on the flanges (14, 15) of the segments (11).

13. The arrangement (1) according to any one of claims 1 to 12, **characterized in that** coatings or protective elements (19) are arranged on the segments (11).

14. The arrangement (1) according to claim 13, **characterized in that** coatings are provided on the edges of the at least one guide vane (6) of each segment (11), in particular on the front edge (18), seen in respect of the air flow.

15. The arrangement (1) according to claim 13, **characterized in that** protective elements (19) are provided on the edges of the at least one guide vane (6) of each segment (11), in particular on the front edge (18) with respect to the air flow.

## Revendications

1. Dispositif à aubes directrices (1) pour dévier le courant dans le canal de flux secondaire (2) d'une turbine (3), comprenant un anneau externe (4) et un anneau interne (5) et, entre eux, des aubes directrices (6) agencées de manière sensiblement radiale, dans lequel l'anneau externe (4) présente des éléments (7) pour le raccordement avec une structure de turbine externe (8) et l'anneau interne (5) présente des éléments (9) pour le raccordement avec une structure de turbine interne (10), dans lequel il est prévu plusieurs segments (11), chaque segment (11) étant fabriqué d'un seul tenant au moins à partir d'une aube directrice (6) avec une partie (12) de l'anneau externe (4) comprenant au moins deux brides (14) pour la fixation avec la structure de turbine externe (8) et une partie (13) de l'anneau interne (5) comprenant au moins deux brides (15) pour la fixation avec la structure de turbine interne (10), **caractérisé en ce que** les segments (11) sont fabriqués dans un matériau synthétique renforcé par des fibres et **en ce que** au moins une grande partie des fibres de chaque segment (11) est agencée par déviation multiple en continu des brides (14) de la partie (12) de l'anneau externe, via la au moins une aube directrice (6), aux brides (15) de la partie (13) de l'anneau interne.

2. Dispositif (1) selon la revendication 1, **caractérisé en ce que** les segments (11) sont fabriqués dans un matériau synthétique renforcé de fibres de carbone.

3. Dispositif (1) selon la revendication 1 ou 2, **caractérisé en ce que** des matériaux réactifs, par exemple des fils thermoplastiques, sont cousus ou entrelacés dans le matériau composite synthétique renforcé de fibres.

4. Dispositif (1) selon l'une quelconque des revendications 1 à 3, **caractérisé en ce qu'**il est prévu des coutures dans le matériau composite synthétique renforcé de fibres de manière sensiblement transversale à la direction des couches.

5. Dispositif (1) selon l'une quelconque des revendications 1 à 4, **caractérisé en ce que** chaque segment (11) est fabriqué par un procédé d'injection de résine.

6. Dispositif (1) selon la revendication 5, **caractérisé en ce que** chaque segment (11) est fabriqué par le procédé RTM (Resin Transfer Moulding).

7. Dispositif (1) selon la revendication 5, **caractérisé en ce que** chaque segment (11) est fabriqué par le procédé VARTM (Vacuum-Assisted RTM).

8. Dispositif (1) selon l'une quelconque des revendications 1 à 7, **caractérisé en ce que** plusieurs perçages (16, 17) susceptibles de recevoir des boulons ou similaires sont disposés dans les brides (14, 15) comme éléments (7, 9) de raccordement avec les structures de turbine (8, 10).

9. Dispositif (1) selon l'une quelconque des revendications 1 à 8, **caractérisé en ce que** les segments (11) sont raccordés l'un à l'autre.

10. Dispositif (1) selon la revendication 9, **caractérisé en ce que** les segments (11) sont collés l'un à l'autre.

11. Dispositif (1) selon la revendication 9, **caractérisé en ce que** les segments (11) sont raccordés l'un à l'autre de manière détachable par le biais d'éléments de raccordement, tels que des boulons, des vis ou similaires.

12. Dispositif (1) selon l'une quelconque des revendications 1 à 11, **caractérisé en ce que** des éléments de renfort en matériau synthétique renforcé de fibres sont aménagés sur les brides (14, 15) des segments (11).

13. Dispositif (1) selon l'une quelconque des revendications 1 à 12, **caractérisé en ce que** des revêtements ou des éléments protecteurs (19) sont aménagés sur les segments (11).

14. Dispositif (1) selon la revendication 13, **caractérisé en ce que** des revêtements sont aménagés sur des arêtes de la au moins une aube directrice (6) de chaque segment (11), en particulier sur l'arête avant (18) par rapport au flux d'air.

15. Dispositif (1) selon la revendication 13, **caractérisé en ce que** des éléments protecteurs (19) sont aménagés sur des arêtes de la au moins une aube directrice (6) de chaque segment (11), en particulier sur l'arête avant (18) par rapport au flux d'air.
